# EUROPÄISCHE PATENTANMELDUNG

(11) **EP 4 836 261 A1**
(43) Veröffentlichungstag der Anmeldung: **04.11.2026**
(21) Anmeldenummer: 26172762.2
(22) Anmeldetag: 16.04.2026
(51) Int. Cl.: H02K 15/35

(54) **VORRICHTUNG ZUM AUSRICHTEN VON MITEINANDER ZU VERSCHWEISSENDEN ENDEN ELEKTRISCHER LEITERGESTÄNGE UND VERFAHREN ZUM HERSTELLEN EINES STATORS EINER ELEKTRISCHEN MASCHINE**

(30) Priorität: 28.04.2025 DE 102025116325
(71) Anmelder: Volkswagen Aktiengesellschaft, 38440 Wolfsburg (DE)
(72) Erfinder: Herold, Alexander, 38440 Wolfsburg (DE); Kriege, Dirk, 38440 Wolfsburg (DE); Sinning, Lukas, 38440 Wolfsburg (DE); Shaghaghi, Arash, 38440 Wolfsburg (DE)

(57) **Zusammenfassung**

Vorrichtung zum Ausrichten von miteinander zu verschweißenden Enden elektrischer Leitergestänge und Verfahren zum Herstellen eines Stators einer elektrischen Maschine

Die Erfindung bezieht sich auf eine Vorrichtung zum Ausrichten von miteinander zu verschweißenden Enden (51, 52) elektrischer Leitergestänge, umfassend
- eine Halterung zum Halten der Leitergestänge in einer Vorpositionierungsstellung, in der zwei ein Schweißpaar (50) bildende Enden (51, 52), die jeweils ein Profil mit einer Profilbreite und einer dazu senkrechten Profilhöhe aufweisen, benachbart zueinander angeordnet sind, sodass sich jeweils senkrecht zur Profilhöhe erstreckende Fügeflächen (53) einander zugewandt ausgerichtet sind, und
- eine Klemme (10) mit zwei einen Klemmraum (11) begrenzenden Klemmbacken, die in Richtung einer Reduzierung des Klemmraums (11) relativ zueinander verfahrbar sind, wobei die Klemme (10) derart positionierbar ist, dass das Schweißpaar (50) den Klemmraum (10) axial durchsetzend angeordnet ist,

Die Erfindung zeichnet sich dadurch aus, dass
- jede Klemmbacke zwei in einem rechten Backenwinkel zueinander stehende Backenwände (21, 22; 31, 32), nämlich eine erste Backenwand (21; 31) und eine zweite Backenwand (22; 32), aufweist, wobei die zweite Backenwand (22; 32) länger als die Profilhöhe ist,
- die Klemme derart positionierbar ist, dass ihre ersten Backenwände (21; 31) parallel zu den Fügeflächen (53) ausgerichtet sind, und
- die Klemmbacken in Richtung einer die Winkelscheitel ihrer Backenwinkel verbindenden Diagonalen relativ zueinander verfahrbar sind.

## Beschreibung

Die Erfindung bezieht sich auf eine Vorrichtung zum Ausrichten von miteinander zu verschweißenden Enden elektrischer Leitergestänge, umfassend
- eine Halterung zum Halten der Leitergestänge in einer Vorpositionierungsstellung, in der zwei ein Schweißpaar bildende Enden, die jeweils ein (meist, aber nicht zwingend in etwa rechteckiges) Profil mit einer Profilbreite und einer dazu senkrechten Profilhöhe aufweisen, benachbart zueinander angeordnet sind, sodass sich jeweils senkrecht zur Profilhöhe erstreckende Fügeflächen einander zugewandt ausgerichtet sind, und
- eine Klemme mit zwei einen Klemmraum begrenzenden Klemmbacken, die in Richtung einer Reduzierung des Klemmraums relativ zueinander verfahrbar sind, wobei die Klemme derart positionierbar ist, dass das Schweißpaar den Klemmraum axial durchsetzend angeordnet ist.

Die Erfindung bezieht sich weiter auf ein Verfahren zum Herstellen eines Stators einer elektrischen Maschine unter Verwendung einer derartigen Vorrichtung.

Eine derartige Vorrichtung und ein derartiges Verfahren sind bekannt aus der CN 117506292A.

Bekanntermaßen bestehen Statoren elektrischer Maschinen, insbesondere Statoren von Traktionsmaschinen für elektrifizierte Kraftfahrzeuge, im Wesentlichen aus einem sogenannten Blechpaket, welches von elektrischen Wicklungen durchsetzt ist. Bei dem Blechpaket handelt es sich typischerweise um einen Stapel dicht gepackter, scheibenförmiger Elektrobleche. Diese weisen Durchgangsöffnungen auf, die gemeinsam das Blechpaket in axialer Richtung durchziehende Kanäle bilden. In diesen Kanälen sitzen Leiterstangen, die das Blechpaket axial beidseitig überragen und auf jeder Seite des Blechpaketes in unterschiedlicher Paarung paarweise miteinander verbunden sind. Es ist bekannt, zur Herstellung solcher Statoren als "Hairpins" bezeichnete Leitergestänge zu verwenden. Ein Hairpin besteht aus zwei parallel erstreckten Stangenbereichen, die einseitig über einen komplex geformten Umlenkbereich miteinander verbunden sind und in ihrer Gesamtform an eine namensgebende Haarnadel erinnern. Solche Hairpins werden einzeln oder in vorkonfektionierten Gruppen in die oben genannten Kanäle des Blechpaketes eingeführt und dort fixiert. Vorrichtungen hierfür sind bekannt aus der DE 10 2019 114 221 A1 und der DE 10 2021 133 843 A1. Die Umlenkbereiche befinden sich dabei typischerweise sämtlich auf einer oft als Biegeseite bezeichneten, axialen Seite des Blechpaketes. Die freien Enden ragen aus der anderen, oft als Twist- oder Schweißseite bezeichneten, axialen Seite des Blechpaketes heraus. Sie werden einem Umformprozess (Twisten) unterworfen, der dafür sorgen soll, dass miteinander zu verbindende Enden mit ihren jeweiligen Fügeflächen aneinander anliegen, um in einem nachfolgenden Fügeprozess (Schweißen) miteinander verbunden werden zu können. Aufgrund der Eigenelastizitäten der Leitergestänge ist es jedoch kaum möglich, die jeweils miteinander zu verschweißenden Enden, die hier als Schweißpaare bezeichnet werden, allein durch den genannten Umformprozess so exakt und mit ihren Fügeflächen eng aneinander anliegend zu positionieren, dass eine zuverlässig reproduzierbare Verschweißung durchgeführt werden kann. Ungenauigkeiten beim Schweißen können jedoch zu Unterschieden der lokalen Leitfähigkeit verschiedener Schweißpaare führen, was im Hinblick auf die hohen, bei Betrieb einer elektrischen Traktionsmaschine fließenden Ströme zu lokal unterschiedlicher Temperaturentwicklung und Minderungen der Betriebseffizienz führen kann.

Aus der eingangs genannten, gattungsbildenden CN 117506292A ist es bekannt, die miteinander zu verschweißenden Enden eines Schweißpaares vor dem Schweißprozess mit ihren Fügeflächen gegeneinanderzupressen. Hierzu sind parallel zu den Fügeflächen erstreckte Klemmbacken vorgesehen, die senkrecht zu den Fügeflächen aufeinander zugestellt werden und dadurch die miteinander zu verschweißenden Enden gegeneinander pressen. Nachteilig bei diesem Ansatz ist, dass ein eventueller Lateralversatz der Fügeflächen nicht kompensiert wird. So ist es möglich, dass die Enden im Rahmen des Twistens mit einem Versatz in Richtung ihrer Profilbreite positioniert werden. Bei dem in Richtung der Profilhöhe vollzogenen Klemmprozess, bei dem die Fügeflächen aneinander gepresst werden, bleibt dieser Lateralversatz bestehen. Entsprechend kann die effektive bzw. genutzte Fügefläche schweißpaarweise unterschiedlich ausfallen, was zu den oben genannten, nachteiligen Unterschieden der lokalen Leitfähigkeit führt.

Es ist die Aufgabe der vorliegenden Erfindung, eine Vorrichtung zur Verfügung zu stellen, die ein exakteres und reproduzierbareres Fügen der Schweißpaare ermöglicht.

Diese Aufgabe wird in Verbindung mit den Merkmalen des Oberbegriffs von Anspruch 1 dadurch gelöst, dass
- jede Klemmbacke zwei in einem rechten Backenwinkel zueinander stehende Backenwände, nämlich eine erste Backenwand und eine zweite Backenwand, aufweist, wobei die zweite Backenwand länger als die Profilhöhe ist,
- die Klemme derart positionierbar ist, dass ihre ersten Backenwände parallel zu den Fügeflächen ausgerichtet sind, und
- die Klemmbacken in Richtung einer die Winkelscheitel ihrer Backenwinkel verbindenden Diagonalen relativ zueinander verfahrbar sind.

Ein mit einer solchen Vorrichtung mögliches Herstellungsverfahren für einen Stator einer elektrischen Maschine ist Gegenstand des nebengeordneten Anspruchs 10.

Bevorzugte Ausführungsformen der Erfindung sind Gegenstand der abhängigen Patentansprüche.

Die Grundidee der vorliegenden Erfindung ist es, die Anpresskraft, mit welcher die beiden Enden eines Schweißpaares gegeneinander gepresst werden, schräg zu ihren Fügeflächen einzuleiten. Eine solch schräge Anpresskraft kann vektoriell aufgespalten werden in eine Kraftkomponente in Richtung der Profilhöhe und eine Kraftkomponente in Richtung der Profilbreite. Beide Komponente werden effektiv in jedes der Enden eines Schweißpaares eingeleitet, da die Klemmbacken der erfindungsgemäßen Klemme zwei entsprechend, d.h. senkrecht zueinander und parallel zur Axialrichtung ausgerichtete Backenwände aufweisen. Jede Klemmbacke legt sich also mit ihrer ersten Backenwand an die der Fügefläche abgewandte Rückseite des zugeordneten Endes an. Mit ihrer zweiten Backenwand liegt sie - zumindest in einem späten Stadium des Anpressprozesses - an einer dieser zugewandten und senkrecht zur Fügefläche ausgerichteten Lateralseite des Leitergestänge-Endes an. Durch das schräge, insbesondere diagonale Zustellen der Klemmbacken aufeinander zu kann auf diese Weise jeder eventuell bestehende Lateralversatz der Leitergestänge-Enden auf Null reduziert werden, sodass im Endzustand des Anpressprozesses die beiden miteinander zu verschweißenden Enden vollflächig mit ihren Fügeflächen aneinander anliegen. Dieses Ergebnis wird unabhängig von der Größe eines eventuell anfänglich existierenden Lateralversatzes erzielt. Der abschließende Füge-, insbesondere Schweißprozess kann also exakt reproduzierbar unter immer gleichen Ausgangsvoraussetzungen durchgeführt werden. Die obige Erklärung ist besonders leicht verständlich, wenn man versucht, sie an Leitergestänge-Enden mit rechteckigem Profil nachzuvollziehen. Die Erfindung funktioniert aber auch bei anderen Profilformen, z.B. bei halbkreisförmigen Profilen.

Die erfindungsgemäße Grundidee lässt sich insbesondere in zwei verschiedenen Varianten realisieren, die hier als die "offene" Variante und die "geschlossene" Variante angesprochen werden sollen.

Bei der offenen Variante ist vorgesehen, dass jede Klemmbacke einen zur jeweils anderen Klemmbacke hin offenen Teilraum des Klemmraums begrenzt. Mit anderen Worten sind die Klemmbacken offen winkelförmig gestaltet und bestehen im Wesentlichen lediglich aus ihrer ersten und ihrer zweiten Backenwand. Bei dieser Ausführungsform ist es möglich, dass die Klemmbacken in Bezug auf die Axialrichtung des Schweißpaares auf selber Höhe angeordnet sind. Die Klemmbacken werden also in derselben Zustellebene aufeinander zugestellt. Der Vorteil dieser Variante liegt darin, dass der durch eine aus Stabilitätsgründen vorgegebene Mindestdicke der Klemmbacken nach unten begrenzte axiale Bauraum minimiert wird. Dies erlaubt es, den Überstand der Leitergestänge-Enden über das Blechpaket des Stators zu minimieren. Allerdings muss bei einer solchen Ausführungsform dafür Sorge getragen werden, dass die erste Backenwand kürzer als die Profilbreite und/oder die zweite Backenwand kürzer als die doppelte Profilhöhe ist. Anderenfalls könnten die Klemmbacken in unerwünschter Weise miteinander kollidieren. Allerdings sollte die zweite Klemmbacke länger als die einfache Profilhöhe sein, um bei etwaigem Lateralversatz der Enden das von ihr nicht primär erfasste Ende seitlich "einfangen" zu können. Je länger die zweite Backenwand dabei ist, desto größer kann ein anfängliche Spalt zwischen den Fügeflächen sein.

Bei der geschlossenen Variante ist vorgesehen, dass jede Klemmbacke einen senkrecht zur Axialrichtung des Schweißpaares vollumfänglich geschlossenen Teilraum begrenzt, wobei der Klemmraum dem Überlapp beider Teilräume entspricht. Mit anderen Worten weist jede Klemmbacke eine Klemm-Durchgangsöffnung auf, durch die das Schweißpaar hindurchragt. Die beiden Klemmbacken sind dabei in Bezug auf die Axialrichtung des Schweißpaares auf unterschiedlichen Höhen angeordnet. Jede Klemmbacke weist also außer den auch bei der offenen Variante vorliegenden, aktiven Backenwänden zwei gegenüberliegende, für den eigentlichen Klemmprozess nicht genutzte, inaktive Backenwände auf. Diese können zu einer Stabilisierung beitragen, die konstruktiv in einer Reduzierung der Mindestdicke der Klemmbacken umgesetzt werden kann. Dies wirkt der Vergrößerung des axialen axialen Brauraumes der Klemme entgegen, der aus der notwendigen Anordnung der Klemmbacken auf unterschiedlichen axialen Höhen resultiert. Es versteht sich, dass die den Klemmraum definierenden Klemm-Durchgangsöffnungen gegenüber dem Schweißpaar, einschließlich dessen Fertigungs- und Positionierungstoleranzen, übermaßig dimensioniert sein müssen. Die Größe dieses Übermaßes definiert die tolerierbaren Abweichungen von der Soll-Positionierung und -Dimensionierung der Enden zueinander.

Günstigerweise lassen sich mit der erfindungsgemäßen Klemme mehrere Schweißpaare gleichzeitig erfassen. Hierzu ist bevorzugt vorgesehen, dass jede Klemmbacke Bestandteil einer mehrere Klemmbacken umfassende Klemmscheibe ist. Bei der offenen Variante weisen diese Klemmscheiben einander zugewandte, gezahnte Ränder auf, wobei die Zahnflanken jeweils die ersten und zweiten Backenwände darstellen. Bei der geschlossenen Variante weisen die Klemmscheiben nahe ihrer einander zugewandten Ränder korrespondierende Reihen von Klemm-Durchgangsöffnungen auf.

Wie eingangs erläutert, erfolgt die Verschweißung der Schweißpaare vorzugsweise an bereits in ein Blechpaket eingesetzten Hairpins. Die Schweißpaare bilden ein komplexes, dichtes Muster, welches sich auf der Twist- bzw. Schweißseite des Blechpaketes parallel zur Blechpaket-Stirnwand erstreckt. Dies erschwert die Zugänglichkeit bzw. Erreichbarkeit einzelner Schweißpaare für die Klemme, insbesondere wenn diese mit zwei vergleichsweise großflächigen Klemmscheiben ausgebildet ist. Daher ist bei einer Weiterbildung der Erfindung vorgesehen, dass jede Klemmscheibe ein Muster von Ausweich-Durchgangsöffnungen aufweist, welches hinsichtlich der Anordnung und Dimensionierung einem Muster von mehreren, in der Haltevorrichtung gehaltenen Schweißpaaren entspricht. Solche Klemmscheiben können in axialer Richtung auf das Muster von Schweißpaaren aufgefädelt werden. Beim Zustellen der Klemmscheiben aufeinander zu werden lediglich die Klemmbacken aktiv. Die Ausweich-Durchgangsöffnungen sind so groß dimensioniert, dass sie mit den sie durchragenden (bereits verschweißten oder noch zu verschweißenden) Schweißpaaren nicht oder zumindest nicht in störender Weise kollidieren. Auf diese Weise lassen sich die Klemmscheiben nahezu beliebig groß dimensionieren, was ihrer Stabilität zugutekommt und dadurch ihre erforderliche Mindestdicke reduziert.

Im Kontext der obigen Beschreibung wurde allgemein von einer Halterung zum Halten der Leitergestänge bzw. Schweißpaare gesprochen. Wie bereits beschrieben, handelt es sich hierbei allerdings bevorzugt um eine Halterung zum indirekten Halten des oder der Schweißpaare. So ist bevorzugt vorgesehen, dass die Halterung Halteelemente zum direkten Halten eines Blechpaketes für einen Stator einer elektrischen Maschine aufweist, welches seinerseits Längskanäle zum direkten Halten der Leitergestänge aufweist.

Ein Verfahren zum Herstellen eines Stators einer elektrischen Maschine unter Verwendung einer solchen, erfindungsgemäßen Ausrichtevorrichtung umfasst bevorzugt die folgenden Schritte:
a) Halten eines mit einer Mehrzahl von Leitergestängen bestückten Blechpaketes mittels der Halterung,
   wobei Enden der Leitergestänge, die jeweils ein (bevorzugt im Wesentlichen rechteckigs) Profil mit einer Profilbreite und einer Profilhöhe aufweisen, das Blechpaket einseitig überragen, in einer gemeinsamen Axialrichtung ausgerichtet sind und jeweils paarweise ein Schweißpaar mit einander zugewandten und sich senkrecht zur Profilhöhe erstreckenden Fügeflächen bilden
   und wobei die Schweißpaare in einem vorgegebenen, senkrecht zur Axialrichtung verteilten Muster in dem Blechpaket angeordnet sind,
b) axiales Zustellen der Klemmscheiben, sodass jeweils ein Schweißpaar in einen Klemmraum oder in eine Ausweich-Durchgangsöffnung eingefädelt wird,
c) radiales Zustellen der Klemmscheiben, sodass die jeweils paarweise einen Klemmraum begrenzenden Klemmbacken in Richtung ihrer jeweiligen, die Winkelscheitel ihrer Backenwinkel verbindenden Diagonalen aufeinander zu verfahren und dadurch die in dem entsprechenden Klemmraum befindlichen Enden mit ihren Fügeflächen zusammengepresst werden, und
d) Verschweißen der Enden jedes zusammengepressten Schweißpaares miteinander.

Da die Hairpins typischerweise mit Überlänge in den Stator eingeschoben werden, ist bevorzugt vorgesehen, dass zwischen dem Schritt des radialen Zustellens der Klemmscheiben und dem Schritt des Verschweißens der Enden jedes zusammengepressten Schweißpaares ein Schritt des Ablängens jedes zusammengepressten Schweißpaares erfolgt, bei dem die Enden des jeweiligen Schweißpaares auf der dem Blechpaket abgewandten Seite der Klemmscheiben auf gleicher axialer Höhe abgelängt werden.

Weitere Merkmale und Vorteile der Erfindung ergeben sich aus der nachfolgenden, speziellen Beschreibung und den Zeichnungen.

Es zeigen:
- Figur 1: eine schematische Draufsicht auf die Stirnseite eines vorkonfektionierten Blechpaketes mit einsatzbereiter Klemme der erfindungsgemäßen Ausrichtungsvorrichtung,
- Figur 2: eine vergrößerte Darstellung des in Figur 1 mit II bezeichneten Vergrößerungsausschnittes zu Beginn des Klemmschrittes,
- Figur 3: der Ausschnitt von Figur 2 am Ende des Klemmschrittes,
- Figur 4: zwei Klemmscheiben einer alternativen Ausführungsform der Klemme der erfindungsgemäßen Ausrichtungsvorrichtung sowie
- Figur 5: eine schematische Schnittdarstellung zur Illustration des Wirkprinzips der Klemme von Figur 4.

Gleiche Bezugszeichen in den Figuren weisen auf gleiche oder analoge Elemente hin.

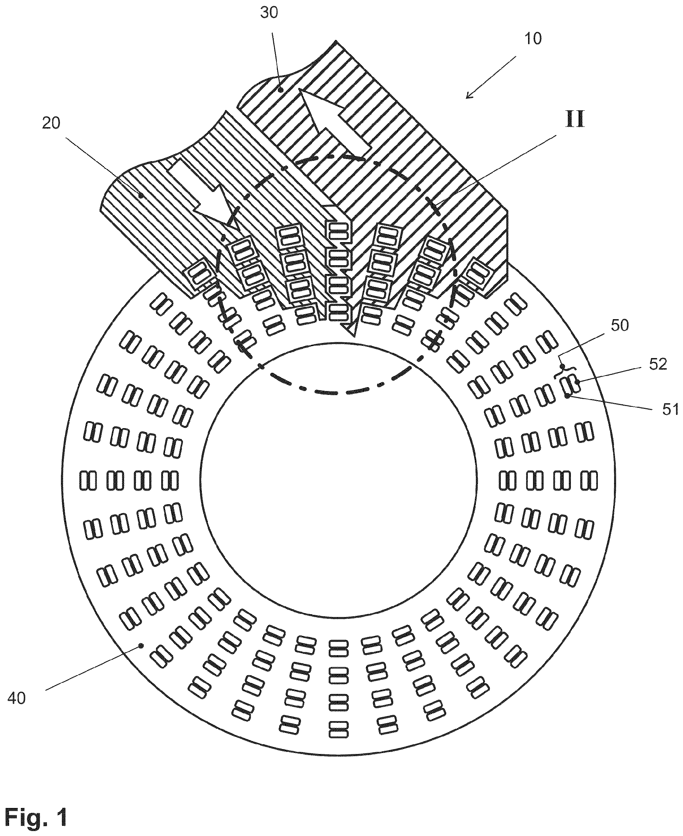

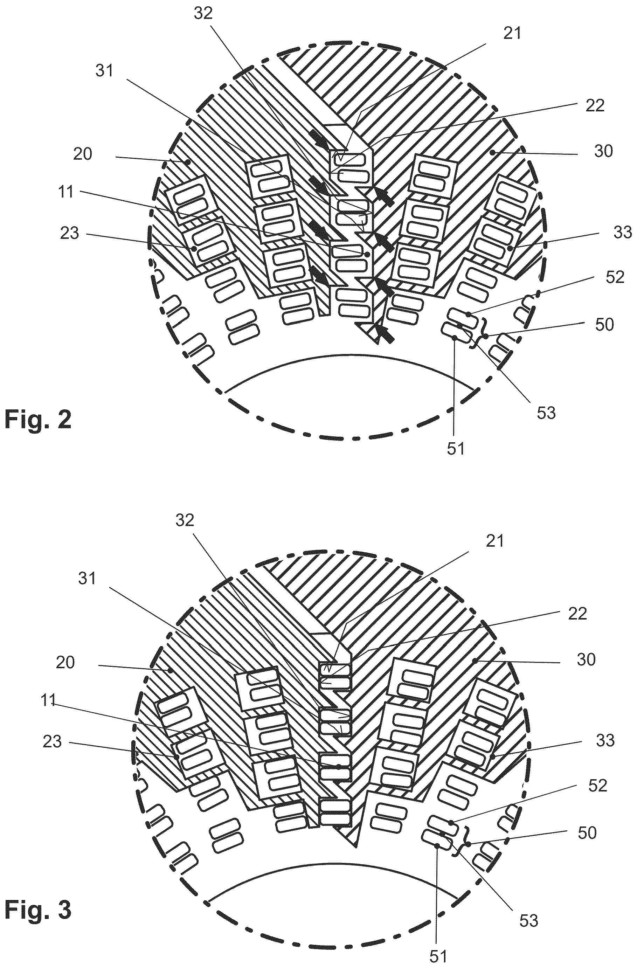

Figur 1 zeigt in stark schematisierter Darstellung die Klemme 10 einer erfindungsgemäßen Ausrichtungsvorrichtung in Betriebsstellung an einem vorkonfektionierten Stator-Rohling. Die Figuren 2 und 3 zeigen Ausschnittvergrößerungen des Vergrößerungsbereichs II in Figur 1, die unterschiedliche Verfahrenszeitpunkte illustrieren. Sofern nicht ausdrücklich anderes gesagt ist, werden die Figuren 1 bis 3 nachfolgend gemeinsam beschrieben.

Der Stator-Rohling umfasst ein Blechpaket 40 mit axialen Durchgangskanälen, in welchen Leitergestänge, insbesondere sogenannte Hairpins, d.h. durch einen nicht dargestellten, gebogenen Abschnitt verbundene Leiterstangen, vorfixiert sind. In Figur 1 sind lediglich die sich in Axialrichtung des Blechpaketes 40 erstreckenden Enden 51, 52 besagter Leitergestänge dargestellt. Insbesondere sind jeweils zwei Enden 51, 52 einem Schweißpaar 50 zugeordnet. Die Positionen, an denen in Figur 1 die Enden 51, 52 dargestellt sind, entsprechen nicht denjenigen Orten, an denen sie aus der Stirnseite des Blechpaketes 40 austreten. Die durch einen vorangegangenen Umformprozess, das sogenannte Twisten, geschaffenen, gebogenen Übergangsbereiche zwischen den dargestellten Enden 51, 52 und ihren Austrittspositionen aus dem Blechpaket 40 sind der Übersichtlichkeit halber in Figur 1 nicht dargestellt. Im Kontext der vorliegenden Erfindung genügt es festzuhalten, dass jeweils zwei zu einem Schweißpaar 50 zusammengestellte Enden 51, 52 mit ihren einander zugewandten Fügeflächen 53 gegeneinandergepresst werden sollen, um sie anschließend miteinander verschweißen zu können. Für diesen Klemmvorgang ist die erfindungsgemäße Klemme 10 vorgesehen. Sie umfasst bei der in Figur 1 dargestellten Ausführungsform zwei Klemmscheiben 20, 30, die gemäß den weißen Pfeilen relativ zueinander verfahrbar sind. Die in Figur 1 dargestellte Startposition für den Klemmvorgang ist in Figur 2 ausschnittsweise vergrößert wiedergegeben.

Die einander zugewandten Ränder der Klemmscheiben 20, 30 sind gezahnt ausgebildet, sodass sich zwischen den Klemmscheiben 20, 30 der Klemme 10 eine Reihe von (bei der dargestellten Ausführungsform vier) Klemmräumen 11 ergibt. Jeder Klemmraum 11 ist von zwei durch die Zahnung der Klemmscheibenränder geschaffenen Klemmbacken begrenzt, wobei jede Klemmbacke eine erste Backenwand 21 bzw. 31 sowie eine zweite Backenwand 22 bzw. 32 aufweist. Die ersten Backenwände 21, 31 stehen senkrecht zu den jeweils zugeordneten zweiten Backenwänden 22, 32. Insbesondere sind die ersten Backenwände 21, 31 senkrecht zur Profilhöhe der Enden 51, 52, d.h. parallel zu den Fügeflächen 53 des jeweils zugeordneten Schweißpaares 50 bzw. senkrecht zu dem durch die Anpressung zu reduzierenden Spalt zwischen den Enden 51, 52 ausgerichtet. Die zweiten Backenwände 22, 32 sind hingegen senkrecht zur Profilbreite der Enden 51, 52, d.h. senkrecht zu den Fügeflächen 53 des jeweils zugeordneten Schweißpaares 50 bzw. parallel zu dem Spalt zwischen den Enden 51, 52 ausgerichtet.

Um den in Figur 1 bzw. 2 dargestellten Zustand zu erreichen, wird die Klemme 10 in axialer Richtung auf das mit den Schweißpaaren 50 vorkonfektionierte Blechpaket 40 zugestellt, sodass die aktuellen Schweißpaare 50, d.h. die in einem unmittelbar nachfolgenden Schweißschritt miteinander zu verschweißenden Enden 51, 52, in den Klemmräumen 11 positioniert werden. Mit anderen Worten wird die Klemme 10 auf die Schweißpaare 50 aufgefädelt. Um dabei nicht mit den übrigen, in einem früheren Schweißschritt bereits verschweißten oder in einem späteren Schweißschritt noch zu verschweißenden Schweißpaaren zu kollidieren, weisen die Klemmscheiben 20, 30 entsprechende Ausweich-Durchgangsöffnungen 23, 33 auf, durch welche die kollisionsgefährdeten, nicht-aktuellen Schweißpaare 50 hindurchragen können.

Zur Durchführung des erfindungsgemäßen Klemmschrittes werden die Klemmbacken 20, 30, wie mit den weißen Pfeilen in Figur 1 bzw. den schwarzen Pfeilen in Figur 2 angedeutet, diagonal (in Bezug auf die Klemmräume 11) zueinander verfahren. Die Klemmräume 11 werden dadurch verkleinert und die Enden 51, 52 der aktuellen Schweißpaare 50 sowohl in Richtung ihrer Profilbreite als auch in Richtung ihrer Profilhöhe aufeinander zu bewegt, bis ihre Fügeflächen 53 vollflächig aneinander anliegen. Diese Situation ist in Figur 3 dargestellt.

Die Ausweich-Durchgangsöffnungen 23, 33 ändern bei diesem Prozess ihre Größe nicht. Sie verlagern sich zwar in ihrer Position relativ zu den von ihnen umfassten nicht-aktuellen Schweißpaaren 50; aufgrund des Übermaßes der Ausweich-Durchgangsöffnungen 23, 33 gegenüber den nicht-aktuellen Schweißpaaren 50 wird dadurch jedoch der oben beschriebene Klemmprozess für die aktuellen Schweißpaare 50 nicht behindert.

Man erkennt, dass mittels des erfindungsgemäßen Verfahrens auch mit erheblichen Toleranzen, insbesondere mit Lateral- und Rotationsversätzen ausgerichtete Schweißpaare 50 exakt und vollflächig mit ihren Fügeflächen aneinander angepresst werden, sodass ein nachfolgender Schweißprozess mit hoher Reproduzierbarkeit durchgeführt werden kann. Insbesondere dadurch, dass im gezeigten Ausführungsbeispiel die zweiten Backenwände 22, 32 länger als eine einfache Profilhöhe sind, können lateral versetzte Enden 51, 52 der Schweißpaare 50 lateral "eingefangen" werden.

Zur Klemmung der nächsten Reihe von Schweißpaaren 50 wird die Klemme 10 nach erfolgter Verschweißung der geklemmten, aktuellen Schweißpaare 50 zunächst wieder aufgefahren, dann axial abgehoben, relativ zum vorkonfektionierten Blechpaket 40 azimutal weiterbewegt und wieder axial auf das Blechpaket 40 zugestellt.

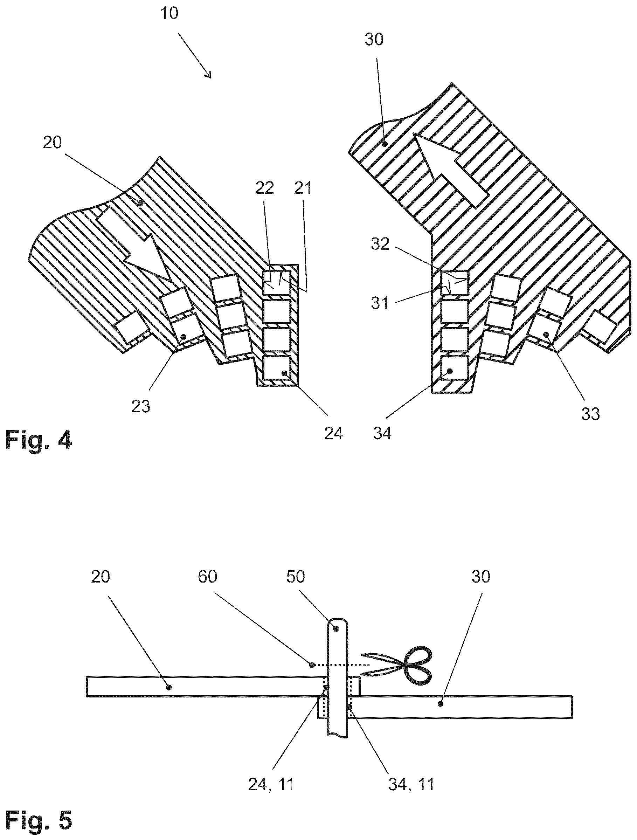

Figur 4 zeigt eine alternative Ausführungsform der Klemme 10 mit zwei Klemmscheiben 20, 30, die anstelle offener Teil-Klemmräume geschlossene Klemm-Durchgangsöffnungen 24, 34 aufweisen. Die in Figur 4 einzeln und beabstandet voneinander dargestellten Klemmscheiben 20, 30 werden bei ihrer Anwendung mit überlappenden Klemm-Durchgangsöffnungen 24, 34 auf unterschiedlichen axialen Höhen angeordnet. Eine Relativverschiebung der Klemmscheiben 20, 30 gemäß den weißen Pfeilen in Figur 4 führt zum selben Ergebnis wie bei der in den Figuren 1 bis 3 dargestellten, offenen Variante der Klemme 10, sodass insoweit auf das oben Gesagte verwiesen werden kann.

Figur 5 zeigt nochmals in einem stark schematischen Schnitt die Anordnung der Klemmscheiben 20, 30 der geschlossenen Variante der Klemme 10 von Figur 4. Zusätzlich in Figur 5 dargestellt ist ein bevorzugt zwischen den Schritten des Klemmens und des Verschweißens durchzuführender Schritt des Ablängens des Schweißpaares 50 entlang der Schnittlinie 60. Dieser Zwischenschritt kann selbstverständlich auch bei einem Schweißpaare 50 durchgeführt werden, welches mittels einer offenen Variante der Klemme 10 geklemmt ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere bei Ausführungsformen der geschlossenen Variante ist es denkbar, mehrere Reihen von Schweißpaaren 50 gleichzeitig zu klemmen, wobei dann aber Abstriche hinsichtlich der eigentlich bevorzugten, jedoch nicht zwingend erforderlichen, perfekten Diagonalität der Zustellrichtung relativ zu den Klemmbacken gemacht werden müssen.

### Bezugszeichenliste

- 10: Klemme
- 11: Klemmraum
- 20: Klemmscheibe
- 21: erste Backenwand
- 22: zweite Backenwand
- 23: Ausweich-Durchgangsöffnung
- 24: Klemm-Durchgangsöffnung
- 30: Klemmscheibe
- 31: erste Backenwand
- 32: zweite Backenwand
- 33: Ausweich-Durchgangsöffnung
- 34: Klemm-Durchgangsöffnung
- 40: Blechpaket
- 50: Schweißpaar
- 51: Ende (eines Leitergestänges)
- 52: Ende (eines Leitergestänges)
- 53: Fügefläche
- 60: Schnittlinie

## Patentansprüche

1. Vorrichtung zum Ausrichten von miteinander zu verschweißenden Enden (51, 52) elektrischer Leitergestänge, umfassend
- eine Halterung zum Halten der Leitergestänge in einer Vorpositionierungsstellung, in der zwei ein Schweißpaar (50) bildende Enden (51, 52), die jeweils ein Profil mit einer Profilbreite und einer dazu senkrechten Profilhöhe aufweisen, benachbart zueinander angeordnet sind, sodass sich jeweils senkrecht zur Profilhöhe erstreckende Fügeflächen (53) einander zugewandt ausgerichtet sind, und
- eine Klemme (10) mit zwei einen Klemmraum (11) begrenzenden Klemmbacken, die in Richtung einer Reduzierung des Klemmraums (11) relativ zueinander verfahrbar sind, wobei die Klemme (10) derart positionierbar ist, dass das Schweißpaar (50) den Klemmraum (10) axial durchsetzend angeordnet ist,
**dadurch gekennzeichnet, dass**
- jede Klemmbacke zwei in einem rechten Backenwinkel zueinander stehende Backenwände (21, 22; 31, 32), nämlich eine erste Backenwand (21; 31) und eine zweite Backenwand (22; 32), aufweist, wobei die zweite Backenwand (22; 32) länger als die Profilhöhe ist,
- die Klemme derart positionierbar ist, dass ihre ersten Backenwände (21; 31) parallel zu den Fügeflächen (53) ausgerichtet sind, und
- die Klemmbacken in Richtung einer die Winkelscheitel ihrer Backenwinkel verbindenden Diagonalen relativ zueinander verfahrbar sind.

2. Vorrichtung nach Anspruch 1,
**dadurch gekennzeichnet,**
**dass** jede Klemmbacke einen zur jeweils anderen Klemmbacke hin offenen Teilraum des Klemmraums (11) begrenzt.

3. Vorrichtung nach Anspruch 2,
**dadurch gekennzeichnet,**
**dass** die erste Backenwand (21; 31) kürzer als die Profilbreite und/oder die zweite Backenwand (22; 32) kürzer als die doppelte Profilhöhe ist.

4. Vorrichtung nach Anspruch 3,
**dadurch gekennzeichnet,**
**dass** die Klemmbacken in Bezug auf die Axialrichtung des Schweißpaares (50) auf selber Höhe angeordnet sind.

5. Vorrichtung nach Anspruch 1,
**dadurch gekennzeichnet,**
**dass** jede Klemmbacke einen senkrecht zur Axialrichtung des Schweißpaares (50) vollumfänglich geschlossenen Teilraum begrenzt, wobei der Klemmraum (11) dem Überlapp beider Teilräume entspricht.

6. Vorrichtung nach Anspruch 5,
**dadurch gekennzeichnet,**
**dass** die Klemmbacken in Bezug auf die Axialrichtung des Schweißpaares (50) auf unterschiedlichen Höhen angeordnet sind.

7. Vorrichtung nach einem der vorangehenden Ansprüche,
**dadurch gekennzeichnet,**
**dass** jede Klemmbacke Bestandteil einer mehrere Klemmbacken umfassenden Klemmscheibe (20; 30) ist.

8. Vorrichtung nach Anspruch 7,
**dadurch gekennzeichnet,**
**dass** jede Klemmscheibe (20; 30) ein Muster von Ausweich-Durchgangsöffnungen (23; 33) aufweist, welches hinsichtlich der Anordnung und Dimensionierung einem Muster von mehreren, in der Haltevorrichtung gehaltenen Schweißpaaren (50) entspricht.

9. Vorrichtung nach einem der vorangehenden Ansprüche,
**dadurch gekennzeichnet,**
**dass** die Halterung zum indirekten Halten des oder der Schweißpaare (50) eingerichtet ist, indem sie Halteelemente zum direkten Halten eines Blechpaketes (40) für einen Stator einer elektrischen Maschine aufweist, welches seinerseits Längskanäle zum direkten Halten der Leitergestänge aufweist.

10. Verfahren zum Herstellen eines Stators einer elektrischen Maschine unter Verwendung einer Vorrichtung nach den Ansprüchen 8 und 9, umfassend die Schritte:
a) Halten eines mit einer Mehrzahl von Leitergestängen bestückten Blechpaketes (40) mittels der Halterung,
wobei Enden (51, 52) der Leitergestänge, die jeweils ein Profil mit einer Profilbreite und einer Profilhöhe aufweisen, das Blechpaket (40) einseitig überragen, in einer gemeinsamen Axialrichtung ausgerichtet sind und jeweils paarweise ein Schweißpaar (50) mit einander zugewandten und sich entlang der Profilbreite erstreckenden Fügeflächen (53) bilden
und wobei die Schweißpaare (50) in einem vorgegebenen, senkrecht zur Axialrichtung verteilten Muster in dem Blechpaket (40) angeordnet sind,
b) axiales Zustellen der Klemmscheiben (20; 30), sodass jeweils ein Schweißpaar (50) in einen Klemmraum (11) oder in eine Ausweich-Durchgangsöffnung (23; 33) eingefädelt wird,
c) radiales Zustellen der Klemmscheiben (20; 30), sodass die jeweils paarweise einen Klemmraum (11) begrenzenden Klemmbacken in Richtung ihrer jeweiligen, die Winkelscheitel ihrer Backenwinkel verbindenden Diagonalen aufeinander zu verfahren und dadurch die in dem entsprechenden Klemmraum (11) befindlichen Enden (51, 52) mit ihren Fügeflächen (53) zusammengepresst werden, und
d) Verschweißen der Enden (51, 52) jedes zusammengepressten Schweißpaares (50) miteinander.

11. Verfahren nach Anspruch 10,
**dadurch gekennzeichnet,**
**dass** zwischen dem Schritt des radialen Zustellens des Klemmscheiben (20; 30) und dem Schritt des Verschweißens der Enden (51, 52) jedes zusammengepressten Schweißpaares (50) ein Schritt des Ablängens jedes zusammengepressten Schweißpaares (50) erfolgt, bei dem die Enden (51, 52) des jeweiligen Schweißpaares (50) auf der dem Blechpaket (40) abgewandten Seite der Klemmscheiben (20; 30) auf gleicher axialer Höhe abgelängt werden.
